# FASCICULE DE BREVET EUROPEEN

(11) **EP 3 390 107 B1**
(45) Date de publication et mention de la délivrance du brevet: **09.09.2020**
(21) Numéro de dépôt: 16825515.6
(22) Date de dépôt: 14.12.2016
(51) Int. Cl.: B60C 11/00, B60C 9/20, B60C 11/03

(54) **SOMMET DE PNEUMATIQUE POUR VÉHICULE LOURD DE TYPE GÉNIE CIVIL**
REIFENKRONE FÜR TIEFBAUSCHWERLASTFAHRZEUG
TYRE CROWN FOR HEAVY GOODS VEHICLE OF THE CIVIL ENGINEERING TYPE

(30) Priorité: 15.12.2015 FR 1562374
(43) Date de publication de la demande: 24.10.2018
(73) Titulaire: Compagnie Générale des Etablissements Michelin, 63000 Clermont-Ferrand (FR)
(72) Inventeur: SPINNLER, Olivier, 63040 Clermont-Ferrand Cedex 9 (FR); NUGIER, Franck, 63040 Clermont-Ferrand Cedex 9 (FR); DOMINGO, Alain, 63040 Clermont-Ferrand Cedex 9 (FR)
(74) Mandataire: Millanvois, Patrick Jacques Jean
(86) Numéro de dépôt international: PCT/FR2016/053427
(87) Numéro de publication internationale: WO 2017/103478

(56) Documents cités:
- WO-A1-2015/140139
- WO-A1-2015/162174
- JP-A- H11 348 509

## Description

La présente invention concerne un pneumatique radial, destiné à équiper un véhicule lourd de type génie civil et, plus particulièrement, le sommet d'un tel pneumatique.

Un tel pneu, correspondant aux caractéristiques du préambule de la revendication 1, est connu par exemple dans WO2015/162174.

Un pneumatique radial pour véhicule lourd de type génie civil est destiné à être monté sur une jante dont le diamètre nominal, au sens de la norme ETRTO (European Tyre and Rim Technical Organisation), est au moins égal à 25 pouces. Bien que non limitée à ce type d'application, l'invention est plus particulièrement décrite en référence à un pneumatique radial de grande dimension, destiné, par exemple, à être monté sur un dumper, véhicule de transport de matériaux extraits de carrières ou de mines de surface. Par pneumatique radial de grande dimension, on entend un pneumatique destiné à être monté sur une jante dont le diamètre nominal est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur », respectivement « radialement extérieur» signifient «plus proche », respectivement « plus éloigné de l'axe de rotation du pneumatique». Par «axialement intérieur », respectivement « axialement extérieur», on entend «plus proche », respectivement « plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend radialement de l'extérieur vers l'intérieur une bande de roulement, une armature de sommet et une armature de carcasse. L'ensemble constitué par la bande de roulement et l'armature de sommet est le sommet du pneumatique.

La bande de roulement est la partie du sommet du pneumatique destinée à entrer en contact avec un sol par l'intermédiaire d'une surface de roulement et à être usée. La bande de roulement comprend au moins un matériau élastomérique et un système plus ou moins complexe de découpures séparant des éléments en relief, appelé sculpture, pour assurer notamment une performance satisfaisante en adhérence.

Les découpures de la bande de roulement peuvent avoir tout type d'orientation par rapport à la direction circonférentielle du pneumatique. On distingue usuellement les découpures longitudinales ou circonférentielles formant, avec la direction circonférentielle, un angle au plus égal à 45°, et les découpures axiales ou transversales formant, avec la direction circonférentielle, un angle au moins égal à 45°. Parmi les découpures, on distingue les rainures et les incisions. Une rainure est une découpure définissant un espace délimité par des parois de matière en regard et distantes l'une de l'autre, de telle sorte que lesdites parois ne peuvent pas venir en contact l'une avec l'autre lors du passage de la bande de roulement dans le contact avec le sol, lorsque le pneumatique est en roulage sous des conditions de charge et de pression nominales recommandées. Une incision est une découpure définissant un espace délimité par des parois de matière venant en contact l'une avec l'autre lors du roulage.

La bande de roulement est généralement caractérisée géométriquement par une largeur axiale W_{T} et une épaisseur radiale H_{T}. La largeur axiale W_{T} est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale H_{T} est définie, par convention, comme la profondeur radiale maximale mesurée dans les découpures. Dans le cas d'un pneumatique pour véhicule lourd de type génie civil, et à titre d'exemple, la largeur axiale W_{T} est au moins égale à 600 mm et l'épaisseur radiale H_{T} est au moins égale à 60 mm.

La bande de roulement est également souvent caractérisée par un taux d'entaillement volumique TEV, égal au rapport entre le volume total V_{D} des découpures, mesuré sur le pneumatique libre c'est-à-dire non monté et non gonflé, et la somme du volume total V_{D} des découpures et du volume total V_{R} des éléments en relief délimités par ces découpures. La somme V_{D}+V_{R} correspond au volume compris radialement entre la surface de roulement et une surface de fond, translatée de la surface de roulement radialement vers l'intérieur d'une distance radiale égale à l'épaisseur radiale H_{T} de la bande de roulement. Ce taux d'entaillement volumique TEV, exprimé en %, conditionne en particulier la performance en usure, par le volume de gomme à user disponible, et la performance en adhérence longitudinale et transversale, par la présence d'arêtes respectivement transversales et longitudinales et de découpures ayant la capacité de stocker ou d'évacuer l'eau ou la boue.

Dans la présente invention, on appelle découpures efficaces, des découpures dont la largeur W_{D} est au plus égale à 20% de leur profondeur radiale H_{D} et dont la profondeur radiale H_{D} est au moins égale à 50% de l'épaisseur radiale H_{T}. Ce sont des incisions larges, c'est-à-dire définissant un espace délimité par des parois de matière venant en contact l'une avec l'autre lors du roulage, cet espace étant suffisamment large pour permettre une circulation d'air dans lesdites découpures efficaces.

Ces découpures efficaces, ayant une longueur cumulée L_{D}, mesurée sur une surface radialement extérieure de la bande roulement, permettent de définir un taux de lamellisation surfacique TL, exprimé en m/m², égal au rapport entre la longueur cumulée L_{D} des découpures efficaces et l'aire A de la surface radialement extérieure de la bande de roulement égale à 2ΠR_{E}*W_{T}, où R_{E} est le rayon extérieur du pneumatique.

Radialement à l'intérieur de la bande de roulement, l'armature de sommet d'un pneumatique radial pour véhicule lourd de type génie civil comprend une superposition de couches de sommet s'étendant circonférentiellement, radialement à l'intérieur de la bande de roulement et à l'extérieur de l'armature de carcasse. Chaque couche de sommet est constituée de renforts généralement métalliques, parallèles entre eux et enrobés d'un matériau élastomérique obtenu par mélangeage appelé communément mélange élastomérique.

Parmi les couches de sommet, on distingue usuellement les couches de protection, constitutives de l'armature de protection et radialement les plus extérieures, les couches de travail, constitutives de l'armature de travail et radialement intérieures à l'armature de protection, et les couches de frettage, le plus souvent radialement comprises entre l'armature de travail et l'armature de carcasse mais pouvant être radialement comprises entre deux couches de travail ou radialement comprises entre l'armature de protection et l'armature de travail.

L'armature de protection, constituée d'au moins deux couches de protection, protège essentiellement les couches de travail des agressions mécaniques ou physico-chimiques, susceptibles de se propager à travers la bande de roulement radialement vers l'intérieur du pneumatique. L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles dont la valeur absolue est généralement comprise entre 15° et 45°, et de préférence comprise entre 20° et 40°.

L'armature de travail, constituée d'au moins deux couches de travail, a pour fonction de ceinturer le pneumatique et de donner de la rigidité et de la tenue de route au pneumatique. L'armature de travail reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. L'armature de travail doit en outre résister à l'oxydation et aux chocs et perforations, grâce à sa conception intrinsèque et à celle de l'armature de protection. L'armature de travail comprend usuellement deux couches de travail, radialement superposées, formées de renforts métalliques non élastiques, parallèles entre eux dans chaque couche et croisés d'une couche à la suivante, en formant, avec la direction circonférentielle, des angles dont la valeur absolue est généralement comprise entre 15° et 45°, et de préférence comprise entre 15° et 40°.

L'armature de frettage, constituée d'au moins une couche de frettage, limite les déformations radiales du sommet au gonflage et contribue à la rigidification du sommet. L'armature de frettage comprend souvent deux couches de frettage, radialement superposées, formées de renforts métalliques non élastiques ou élastiques, parallèles entre eux dans chaque couche et croisés d'une couche à la suivante, en formant, avec la direction circonférentielle, des angles dont la valeur absolue est au plus égale à 15°, de préférence au plus égale à 8°.

Un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement (loi de Hooke). L'allongement plastique Ap résulte de la plasticité (déformation irréversible au-delà de la limite d'élasticité) du métal de ces fils métalliques pris individuellement. Ces différents allongements ainsi que leur signification respective, bien connus de l'homme du métier, sont décrits, par exemple, dans les documents US5843583, WO2005/014925 et WO2007/090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux le plus souvent utilisés dans les couches de protection, et les renforts métalliques non élastiques, tels que ceux généralement utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa, de préférence entre 70 GPa et 110 GPa. Sa force à rupture Fm est généralement au moins égale à 500 daN.

Un renfort métallique élastique est souvent un câble élastique multi torons, c'est-à-dire formé d'un assemblage de plusieurs torons, et dont la structure est, par exemple, du type K*(L+M) dans le cas fréquent où les torons sont des torons à deux couches. K est le nombre de torons à deux couches, L est le nombre de fils métalliques constituant la couche interne d'un toron et M est le nombre de fils métalliques constituant la couche externe d'un toron. Un toron à deux couches est usuellement obtenu par enroulement en hélice de M fils constituant une couche externe du toron autour de L fils constituant une couche interne du toron.

Pour un câble élastique multi torons, l'allongement structural As résulte de la construction et de l'aération même du câble multi torons et/ou de ses torons élémentaires ainsi que de leur élasticité propre, le cas échéant d'une préformation imposée à un ou plusieurs de ces torons et/ou fils constitutifs. L'aération du câble résulte, d'une part, de l'écartement des fils par rapport à la direction axiale (direction perpendiculaire à la direction de l'axe du toron) et d'autre part, de l'écartement des torons par rapport à la direction axiale (direction perpendiculaire à la direction de l'axe du câble).

Un renfort métallique non élastique est caractérisé par un allongement total, sous une force de traction égale à 10% de la force à rupture Fm, au plus égal à 0.2%. Par ailleurs, un renfort métallique non élastique a un module élastique en extension compris usuellement entre 150 GPa et 200 GPa.

Concernant l'usage d'un pneumatique pour véhicule lourd de type génie civil, celui-ci est destiné à porter des charges élevées et à rouler sur des pistes recouvertes de cailloux de diverses tailles.

Un roulage sous charge élevée va générer, en particulier dans le sommet du pneumatique, des températures élevées susceptibles d'entraîner des dégradations des composants du sommet et de limiter son endurance, et par conséquent la durée de vie du pneumatique. Des températures élevées sont en particulier générées dans l'armature de travail dont les couches de travail peuvent se séparer sous l'action de la chaleur : on parle alors de clivage thermique. La diminution du niveau thermique du sommet du pneumatique pour lutter contre le clivage thermique est une préoccupation constante du concepteur de pneumatique.

Par ailleurs un roulage sur des pistes recouvertes de cailloux, qui vont indenter la bande de roulement, va générer des agressions du sommet du pneumatique par ces indenteurs. Plus précisément, les indenteurs vont d'une part agresser la bande de roulement, d'autre part se coincer, le cas échéant, dans les découpures de la bande de roulement. Le coincement des cailloux dans les découpures de la bande de roulement, appelé usuellement rétention cailloux, est susceptible d'initier des fissures en fond de découpures qui vont se propager radialement vers l'intérieur du sommet du pneumatique pour atteindre l'armature de sommet, et plus précisément l'armature de protection, qui va se dégrader au cours du temps et se rompre : ce qui va réduire la durée de vie du pneumatique. Ce phénomène est d'autant plus marqué que les découpures de la bande de roulement sont nombreuses et/ou ont un volume important, c'est-à-dire que le taux d'entaillement volumique de la bande roulement est élevé, typiquement au moins égal à 12%. Ce problème d'agressions du sommet est donc également une préoccupation du concepteur de pneumatique.

Pour réduire le niveau thermique du sommet du pneumatique, une solution connue est d'entailler la bande de roulement à un niveau suffisant, c'est-à-dire d'avoir un taux d'entaillement volumique élevé, pour abaisser les températures générées dans le sommet à un niveau acceptable. Plus le taux d'entaillement volumique est élevé, plus le niveau thermique du sommet va être diminué, mais plus le sommet risque d'être agressé par les indenteurs présents sur les pistes.

Les inventeurs se sont donnés pour objectif de désensibiliser le sommet d'un pneumatique radial pour véhicule lourd de type génie civil aux agressions par des indenteurs, en particulier dans le cas d'une bande de roulement à taux d'entaillement volumique élevé.

Cet objectif a été atteint, selon l'invention, par un pneumatique pour véhicule lourd de type génie civil comprenant une bande de roulement et une armature de sommet, radialement intérieure à la bande de roulement:
- la bande de roulement, ayant une épaisseur radiale H_{T} au moins égale à 60 mm, comprenant des découpures, ayant une largeur W_{D} et une profondeur radiale H_{D}, et des éléments en relief, séparés par les découpures,
- les découpures, dont la largeur W_{D} est au plus égale à 20% de la profondeur radiale H_{D} et dont la profondeur radiale H_{D} est au moins égale à 50% de l'épaisseur radiale H_{T}, dites découpures efficaces, ayant une longueur cumulée L_{D}, mesurée sur une surface radialement extérieure de la bande roulement,
- la bande de roulement ayant un taux de lamellisation surfacique TL, exprimé en m/m², égal au rapport entre la longueur cumulée L_{D} des découpures efficaces et l'aire A de la surface radialement extérieure de la bande de roulement égale à 2ΠR_{E}*W_{T}, où R_{E} est le rayon extérieur du pneumatique,
- l'armature de sommet comprenant une armature de protection, une armature de travail et une armature de frettage,
- l'armature de protection, radialement la plus extérieure, comprenant au moins deux couches de protection, formées de renforts métalliques élastiques, formant, avec la direction circonférentielle, un angle compris entre 15° et 45°, chaque couche de protection ayant une résistance à rupture R par unité de largeur de couche, exprimée en daN/m, Rₘₐₓ étant la valeur maximale des résistances à rupture R des couches de protection,
- l'armature de travail comprenant au moins deux couches de travail, formées de renforts métalliques non élastiques, croisés d'une couche de travail à la suivante et formant, avec une direction circonférentielle du pneumatique, un angle compris entre 15° et 45°,
- l'armature de frettage, comprenant au moins une couche de frettage, formée de renforts métalliques, formant, avec la direction circonférentielle, un angle un angle au plus égal à 15°,
- le taux de lamellisation surfacique TL de la bande de roulement étant au moins égal à 3 m/m²
- et un ratio de couplage C, égal au rapport entre la valeur maximale Rₘₐₓ des résistances à rupture R des couches de protection et le taux de lamellisation surfacique TL de la bande de roulement, étant au moins égal à 30000 daN.

Un taux de lamellisation surfacique TL de la bande de roulement minimum, c'est-à-dire une longueur cumulée L_{D} minimale des découpures efficaces par unité de surface, garantit une ventilation minimale des découpures efficaces de la bande de roulement, donc un refroidissement de la bande de roulement et, par conséquent, une diminution des températures internes du sommet, en particulier au niveau des extrémités axiales des couches de travail, zones d'initiation préférentielle du clivage thermique.

Un ratio de couplage C, égal au rapport entre la valeur maximale Rₘₐₓ des résistances à rupture R des couches de protection et le taux de lamellisation surfacique TL de la bande de roulement, minimal est nécessaire à la résistance mécanique de l'armature de protection, pour un taux de lamellisation TL donné.

La combinaison de ces deux caractéristiques essentielles permet d'obtenir un compromis satisfaisant entre le niveau thermique du sommet et la résistance aux agressions du sommet susceptibles d'initier des fissurations à partir de la bande de roulement radialement vers l'intérieur du sommet du pneumatique.

Préférentiellement le ratio de couplage C est au moins égal à 40000 daN. Un ratio de couplage C plus élevé renforce la résistance aux agressions du sommet, donc autorise un usage sur des sols encore plus agressifs à même niveau de refroidissement du sommet.

Plus préférentiellement le ratio de couplage C est au plus égal à 120000 daN. Au-delà de ce ratio de couplage, la valeur maximale Rₘₐₓ des résistances à rupture R des couches de protection nécessite, au niveau de l'armature de protection, un niveau de renforcement pouvant être obtenu avec des renforts métalliques de gros diamètre, impliquant des couches de protection de fortes épaisseurs, susceptibles de dégrader le niveau thermique du sommet.

Avantageusement le taux de lamellisation TL de la bande de roulement est au moins égal à 3.5 m/m². La ventilation des découpures efficaces de la bande de roulement est améliorée par un taux de lamellisation TL plus élevé.

Encore avantageusement le taux de lamellisation TL de la bande de roulement est au plus égal à 9 m/m². Au-delà de ce taux de lamellisation TL, la longueur cumulée L_{D} de découpure efficaces par unité de surface, par conséquent le nombre de découpures efficaces par unité de surface, risque de sensibiliser la bande de roulement aux agressions à un niveau inacceptable. D'une part, le nombre de zones d'initiation de fissures en fond de découpures devient important. D'autre part, du fait du grand nombre de découpures, les dimensions des éléments en relief diminuent et donc leurs rigidités diminuent, ce qui augmente le risque d'arrachement des éléments en relief.

La valeur maximale Rₘₐₓ des résistances à rupture R des couches de protection est avantageusement au moins égale à 150000 daN/m, de préférence au moins égale à 160000 daN/m. Ceci permet de garantir une tenue aux coupures satisfaisante des couches de protection concernées.

Selon un premier mode de réalisation avantageux de l'armature de protection, la résistance à rupture R de la couche de protection la plus radialement extérieure est égale à la valeur maximale Rₘₐₓ des résistances à rupture R des couches de protection. La couche de protection la plus radialement extérieure est la première barrière à la pénétration des indenteurs. Ceci permet d'optimiser la résistance aux coupures de l'armature de protection.

Selon un deuxième mode de réalisation préféré de l'armature de protection, la résistance à rupture R de chaque couche de protection est égale à la valeur maximale Rₘₐₓ des résistances à rupture R des couches de protection. Ceci permet de maximiser la résistance aux coupures de l'armature de protection.

Selon un troisième mode de réalisation avantageux de l'armature de protection, la valeur minimale Rₘᵢₙ des résistances à rupture R des couches de protection est telle que le ratio Rₘᵢₙ/TL est au moins égal à 30000 daN. En d'autres termes, toutes les couches de protection ont une résistance à rupture R telle que le ratio Rₘᵢₙ/TL est au moins égal à 30000 daN. Ceci permet d'obtenir un compromis satisfaisant entre le niveau thermique du sommet et la résistance aux coupures de l'armature de protection.

Selon un mode de réalisation préféré des renforts métalliques des couches de protection, les renforts métalliques élastiques des couches de protection sont des câbles multitorons, constitués d'une unique couche de N torons, N étant compris entre 3 et 5, chaque toron étant constitué de fils métalliques. Ce type de renforts métalliques est caractérisé par une bonne aptitude à la pénétration d'un mélange élastomérique d'enrobage, ce qui garantit une bonne tenue à la corrosion et donc une amélioration de l'endurance de l'armature de protection.

Selon une première variante du mode de réalisation préféré des renforts métalliques des couches de protection, chaque toron, de formule (M+P), comprend une couche interne de M fils métalliques et une couche externe de P fils métalliques enroulée autour de la couche interne. Chaque toron est ainsi constitué de deux couches concentriques de fils métalliques.

Selon un exemple particulier de la première variante du mode de réalisation préféré des renforts métalliques des couches de protection, les renforts métalliques élastiques des couches de protection sont des câbles multitorons, de formule 4*(3+8)*0.35, constitués d'une unique couche de 4 torons, chaque toron comprenant une couche interne de 3 fils métalliques et une couche externe de 8 fils métalliques enroulée autour de la couche interne, et chaque toron étant constitués de fils métalliques de diamètre égal à 0.35 mm.

Selon un autre exemple particulier de la première variante du mode de réalisation préféré des renforts métalliques des couches de protection, les renforts métalliques élastiques des couches de protection sont des câbles multitorons, de formule 4*(4+9)*0.26, constitués d'une unique couche de 4 torons, chaque toron comprenant une couche interne de 4 fils métalliques et une couche externe de 9 fils métalliques enroulée autour de la couche interne, et chaque toron étant constitués de fils métalliques de diamètre égal à 0.26 mm.

Selon une deuxième variante du mode de réalisation préféré des renforts métalliques des couches de protection, chaque toron, de formule (M+N+P), comprend une couche intermédiaire de N fils métalliques enroulée autour de la couche interne de M fils métalliques, la couche externe de P fils métalliques étant enroulée autour de la couche intermédiaire de N fils métalliques. Chaque toron est ainsi constitué de trois couches concentriques de fils métalliques.

Préférentiellement la couche externe de P fils métalliques est insaturée. Par définition, une couche insaturée de fils est telle qu'il existe suffisamment de place dans cette couche pour y ajouter au moins un (P+1)ième fil du même diamètre que les P fils de la couche, plusieurs fils pouvant alors être au contact les uns des autres.

Egalement préférentiellement le diamètre des fils constitutifs de chaque toron est au moins égal à 0.22 mm, de préférence au moins égal à 0.26 mm.

Les renforts métalliques élastiques des couches de protection présentent, au test de perméabilité à l'air, un débit d'air moyen inférieur à 30 cm³/min. Ce critère caractérise la pénétration des renforts métalliques de type câbles métalliques par le mélange élastomérique d'enrobage. Plus ce débit d'air moyen est faible, plus les câbles métalliques sont pénétrés, ce qui améliore leur tenue en endurance, compte tenu d'une faible circulation d'air, et donc d'oxygène, facteur de corrosion, à l'intérieur des renforts.

Concernant le test de perméabilité à l'air, ce test permet de déterminer la perméabilité longitudinale à l'air des câbles métalliques testés, par mesure du volume d'air traversant une éprouvette sous pression constante pendant un temps donné. Le principe d'un tel test, bien connu de l'homme du métier, est de démontrer l'efficacité du traitement d'un câble métallique pour le rendre imperméable à l'air ; il a été décrit par exemple dans la norme ASTM D2692-98.

Le test est réalisé soit sur des câbles métalliques extraits des pneumatiques, donc déjà enrobés de l'extérieur par un mélange élastomérique ou composition de caoutchouc à l'état cuit, soit sur des câbles métalliques bruts de fabrication.

Dans le second cas, les câbles métalliques bruts doivent être préalablement enrobés de l'extérieur par une composition de caoutchouc dite gomme d'enrobage. Pour cela, une série de 10 câbles disposés parallèlement (distance inter-câble : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des câbles métallique étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles métalliques ainsi enrobés, sous forme de parallélépipèdes de dimensions 7x7x20 mm, pour caractérisation.

On utilise comme gomme d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module d'extension à 10% d'allongement E10 de la gomme d'enrobage est de 10 MPa environ.

Le test est réalisé sur 2 cm de longueur de câble métallique, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm3/min). Pendant la mesure, l'échantillon de câble métallique est bloqué dans un joint étanche comprimé (par exemple un joint en mousse dense ou en caoutchouc) de telle manière que seule la quantité d'air traversant le câble métallique d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur les 10 éprouvettes) est d'autant plus faible que l'imperméabilité longitudinale du câble métallique est élevée. La mesure étant faite avec une précision de ± 0,2 cm3/min, les valeurs mesurées inférieures ou égales à 0,2 cm3/min sont considérées comme nulles ; elles correspondent à un câble métalliques qui peut être qualifié d'étanche (totalement étanche) à l'air selon son axe (c'est-à-dire dans sa direction longitudinale).

Selon un mode de réalisation avantageux des couches de protection, les renforts métalliques élastiques des couches de protection sont répartis à un pas moyen compris entre 3.5 mm et 5 mm.

Selon un autre mode de réalisation avantageux de l'invention, l'ensemble des découpures ayant un volume total V_{D} et l'ensemble des éléments en relief ayant un volume total V_{R}, la bande de roulement ayant un taux d'entaillement volumique TEV, exprimé en %, égal au rapport entre le volume total V_{D} des découpures et la somme du volume total V_{D} des découpures et du volume total des éléments en relief, le taux d'entaillement volumique TEV de la bande de roulement est au moins égal à 12%, de préférence au moins égal à 14%. Pour avoir une ventilation thermique efficace de la bande roulement, les découpures doivent à la fois être en nombre suffisant, ce qui se traduit par un taux de lamellisation TL minimal, et avoir un volume suffisant, ce qui se traduit par un taux d'entaillement volumique TEV minimal.

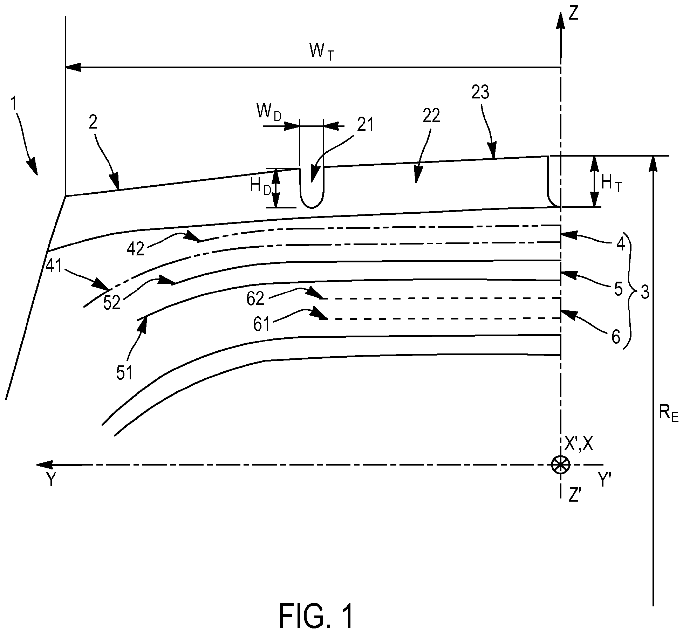

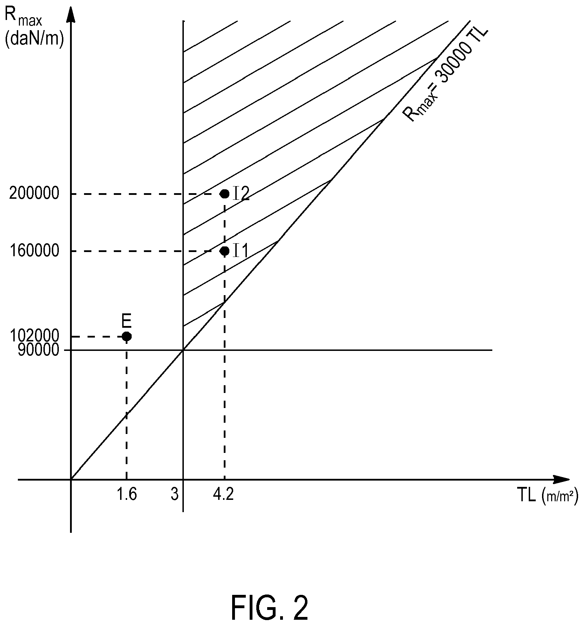

Les caractéristiques de l'invention seront mieux comprises à l'aide des figures 1 et 2, schématiques et non à l'échelle :
- figure 1: demi-coupe, dans un plan méridien, d'un sommet de pneumatique pour véhicule lourd de type génie civil, selon l'invention
- figure 2: domaine des résistances à rupture maximales Rₘₐₓ en fonction du taux de lamellisation TL de la bande de roulement pour un pneumatique pour véhicule lourd de type génie civil, selon l'invention.

Sur la figure 1, est représentée une demi-coupe méridienne, dans un plan YZ du sommet d'un pneumatique 1 pour véhicule lourd de type génie civil comprenant une bande de roulement 2 et une armature de sommet 3, radialement intérieure à la bande de roulement 2. La bande de roulement 2, ayant une épaisseur radiale H_{T} au moins égale à 60 mm, comprend des découpures 21, ayant une largeur W_{D} et une profondeur radiale H_{D}, et des éléments en relief 22, séparés par les découpures 21. Les découpures 21, dont la largeur W_{D} est au plus égale à 20% de la profondeur radiale H_{D} et dont la profondeur radiale H_{D} est au moins égale à 50% de l'épaisseur radiale H_{T}, dites découpures efficaces, ont une longueur cumulée L_{D} (non représentée sur la figure), mesurée sur une surface radialement extérieure 23 de la bande roulement 2. La bande de roulement 2 a un taux de lamellisation surfacique TL, exprimé en m/m², égal au rapport entre la longueur cumulée L_{D} des découpures efficaces 21 et l'aire A de la surface radialement extérieure 23 de la bande de roulement égale à 2ΠR_{E}*W_{T} , où R_{E} est le rayon extérieur du pneumatique mesuré dans le plan équatorial XZ, entre l'axe de révolution YY' et la surface radialement extérieure 23 de la bande de roulement 2 ou surface de roulement. Radialement à l'intérieur de la bande de roulement 2, l'armature de sommet 3 comprend une armature de protection 4, une armature de travail 5 et une armature de frettage 6. L'armature de protection 4, radialement la plus extérieure, comprend deux couches de protection (41, 42), formées de renforts métalliques élastiques, formant, avec la direction circonférentielle XX', un angle compris entre 15° et 45°. Chaque couche de protection (41, 42) a une résistance à rupture R par unité de largeur de couche, exprimée en daN/m, Rₘₐₓ étant la valeur maximale des résistances à rupture R des couches de protection (41, 42). L'armature de travail 5 comprend deux couches de travail (51, 52), formées de renforts métalliques non élastiques, croisés d'une couche de travail à la suivante et formant, avec la direction circonférentielle XX', un angle compris entre 15° et 45°. L'armature de frettage 6 comprend deux couches de frettage (61, 62), formées de renforts métalliques, formant, avec la direction circonférentielle XX', un angle au plus égal à 15°. Selon l'invention, le taux de lamellisation surfacique TL de la bande de roulement 2 est au moins égal à 3 m/m² et un ratio de couplage C, égal au rapport entre la valeur maximale Rₘₐₓ des résistances à rupture R des couches de protection (41, 42) et le taux de lamellisation surfacique TL de la bande de roulement 2, est au moins égal à 30000 daN.

La figure 2 représente le domaine des résistances à rupture maximales Rₘₐₓ en fonction du taux de lamellisation TL de la bande de roulement pour un pneumatique pour véhicule lourd de type génie civil selon l'invention. Selon l'invention, le taux de lamellisation surfacique TL de la bande de roulement est au moins égal à 3 m/m² et un ratio de couplage C, égal au rapport entre la valeur maximale Rₘₐₓ des résistances à rupture R des couches de protection et le taux de lamellisation surfacique TL de la bande de roulement 2, est au moins égal à 30000 daN. Par conséquent, le domaine de l'invention est défini par les résistances à rupture maximales Rₘₐₓ au moins égales à 30000*TL, où TL est le taux de lamellisation surfacique, avec TL au moins égal à 3 m/m². Sur l'axe des abscisses du graphique de la figure 2, est représentée la valeur minimale du taux de lamellisation surfacique TL de la bande de roulement égale à 3 m/m². Sur l'axe des ordonnées du graphique de la figure 2, est représentée la valeur minimale de la résistance maximale Rₘₐₓ des résistances à rupture R des couches de protection égale à 90000 daN/m, correspondant au taux de couplage C minimal égal à 30000 daN. Sur le graphique sont également représentés un premier exemple de réalisation de l'invention I1 dans lequel le taux de lamellisation surfacique TL est égal à 4.2 m/m² et la valeur maximale Rₘₐₓ des résistances à rupture R des couches de protection est égale à 160000 daN/m, les couches de protection comprenant des câbles élastiques multitorons de formule 4*(4+9)*0.26, et un second exemple de réalisation de l'invention I2 dans lequel le taux de lamellisation surfacique TL est égal à 4.2 m/m² et la valeur maximale Rₘₐₓ des résistances à rupture R des couches de protection est égale à 200000 daN/m, les couches de protection comprenant des câbles élastiques multitorons de formule 4*(3+8)*0.35. Sur la figure 2 est également représenté un exemple de l'état de la technique E caractérisé par un taux de lamellisation surfacique TL égal à 1.6 m/m² et une valeur maximale Rₘₐₓ des résistances à rupture R des couches de protection égale à 102000 daN/m, donc en-dehors du domaine de l'invention.

L'invention a plus particulièrement été étudiée pour un pneumatique de dimension 40.00R57. Deux exemples de pneumatique selon l'invention I1 et I2 et un pneumatique de l'état de la technique E, pris en référence, ont été comparés par les inventeurs.

Dans le cas étudié, les pneumatiques respectivement de l'état de la technique E et selon l'invention I1 et I2 ont une armature de de sommet comprenant, radialement de l'extérieur vers l'intérieur, une armature de protection constituée par deux couches de protection avec des renforts métalliques élastiques, une armature de travail constituée par deux couches de travail avec des renforts métalliques non élastiques et une armature de frettage constituée par deux couches de frettage avec des renforts métalliques non élastiques. Concernant l'armature de protection, les renforts métalliques élastiques des deux couches de protection, croisés d'une couche à la suivante, forment, avec la direction circonférentielle XX', un angle égal à 24°, pour le pneumatique de l'état de la technique E, et un angle égal à 33°, pour les pneumatique selon l'invention I1 et I2. Concernant l'armature de travail, les renforts métalliques non élastiques des deux couches de travail, croisés d'une couche à la suivante, forment, avec la direction circonférentielle XX', des angles respectivement égaux à 33° et 19°, pour le pneumatique de l'état de la technique E, et des angles respectivement égaux à 33° et 24°, pour les pneumatiques selon l'invention I1 et I2. Concernant l'armature de frettage, les renforts métalliques non élastiques des deux couches de frettage, croisés d'une couche à la suivante, forment, avec la direction circonférentielle XX', un angle compris entre 6° et 8°, pour le pneumatique de l'état de la technique E et pour les pneumatiques selon l'invention I1 et I2.

Dans le cas étudié, les pneumatiques respectivement de l'état de la technique E et selon l'invention I1 et I2 ont des bandes de roulement comprenant au moins trois découpures ou sillons circonférentiels, les découpures ayant une largeur W_{D} au moins égale à 8 mm. Les bandes de roulement correspondantes ont un taux d'entaillement volumique au moins égal à 12%.

Pour le cas étudié en 40.00R57, les caractéristiques du sommet pour le pneumatique de l'état de la technique E pris en référence et pour les pneumatiques selon l'invention I1 et I2 sont présentées dans le tableau 1 ci-dessous :

**Tableau 1**

| **Dimension du pneumatique** | **E (40.00R57)** | **I1 (40.00R57)** | **I2 (40.00R57)** |
|---|---|---|---|
| Largeur axiale W_{T} de la bande de roulement (m) | 0.98 m | 0.98 m | 0.98 m |
| Epaisseur radiale H_{T} de la bande de roulement (m) | 0.098 m | 0.098 m | 0.098 m |
| Rayon extérieur R_{E} du pneumatique (m) | 1.79 m | 1.79 m | 1.79 m |
| Aire de la surface de roulement A= 2ΠR_{E}*W_{T} (m²) | 11 m² | 11 m² | 11 m² |
| Longueur cumulée L_{D} des découpures efficaces (m) | 17.3 m | 45.8m | 45.8m |
| Taux de lamellisation TL = L_{D}/A (m/m²) | 1.6 m/m² | 4.2 m/m² | 4.2 m/m² |
| Taux d'entaillement volumique TE_{V} (%) | 18.1% | 14.2% | 14.2% |
| Type de renforts métalliques des couches de protection | 4*(1+5)*0.26 | 4*(4+9)*0.26 | 4*(3+8)*0.35 |
| Pas des renforts métalliques des couches de protection (mm) | 2.5 mm | 3.7 mm | 4.8 mm |
| Valeur maximale Rₘₐₓ des résistances à rupture R des couches de protection (daN/m) | 102000 daN/m | 160000 daN/m | 200000 daN/m |
| Ratio de couplage C=Rₘₐₓ/TL (daN) | 63750 daN | 38095 daN | 47620 daN |

Les pneumatiques de l'état de la technique et selon l'invention ont été soumis à des mesures et tests, en particulier pour évaluer le niveau thermique du sommet, lorsque le pneumatique est soumis à des conditions de pression, de charge et de vitesse recommandées, et pour quantifier la résistance à la rupture du sommet, lorsque le pneumatique est soumis à des agressions par des indenteurs.

En ce qui concerne le niveau thermique, la température du sommet est mesurée à proximité des extrémités axiales de l'armature de sommet, qui sont généralement les points chauds du sommet, à l'aide d'une sonde de température. Les résultats de ces mesures thermiques, en termes de températures en extrémités axiales de l'armature de sommet, sont présentés dans le tableau 2 ci-dessous, en valeur relative par rapport au pneumatique de l'état de la technique pris en référence.

Pour caractériser la résistance à la rupture d'une armature de sommet de pneumatique soumise à des chocs, il est connu de l'homme du métier de réaliser des tests consistant à faire rouler un pneumatique, gonflé à une pression recommandée et soumis à une charge recommandée, sur un indenteur cylindrique, appelé polar, de diamètre comprise entre 1 pouce, soit 25.4 mm, et 2.2 pouces, soit 55.9 mm, selon la dimension du pneumatique, et d'une hauteur déterminée. La résistance à la rupture est caractérisée par la hauteur critique du polar, c'est-à-dire la hauteur maximale du polar entraînant une rupture totale de l'armature de sommet, c'est-à-dire de la rupture de toutes les couches de sommet. Les résultats de ces tests d'agression, en termes de hauteurs maximales d'un polar cylindrique de diamètre égal à 2 pouces, sont présentés dans le tableau 2 ci-dessous, par rapport au pneumatique de l'état de la technique pris en référence comme base 100.

Le tableau 2 ci-dessous présente les résultats de performance thermique et de performance en résistance aux agressions pour les pneumatiques de l'état de la technique E et selon l'invention I1 et I2 étudiés:

**Tableau 2**

| **Dimension du pneumatique** | **E (40.00R57)** | **I1 (40.00R57)** | **I2 (40.00R57)** |
|---|---|---|---|
| Performance thermique (températures au niveau des extrémités axiales de l'armature de sommet) | référence | -10°C | -9°C |
| Performance en résistance aux agressions (hauteur maximal du polar cylindrique de diamètre 2 ") | 100 | 140 | 180 |

Le niveau thermique des pneumatiques selon l'invention I1 et I2 est inférieur respectivement de 10° et de 9° par rapport à celui du pneumatique de l'état de la technique E. La performance en résistance aux agressions du sommet des pneumatiques selon l'invention I1 et I2 est respectivement augmentée de 40% et de 80% par rapport à celle du pneumatique de l'état de la technique E.

## Revendications

1. Pneumatique (1) pour véhicule lourd de type génie civil comprenant une bande de roulement (2) et une armature de sommet (3), radialement intérieure à la bande de roulement (2) :
- la bande de roulement (2), ayant une épaisseur radiale H_{T} au moins égale à 60 mm, comprenant des découpures (21), ayant une largeur W_{D} et une profondeur radiale H_{D}, et des éléments en relief (22), séparés par les découpures (21),
- les découpures (21), dont la largeur W_{D} est au plus égale à 20% de la profondeur radiale H_{D} et dont la profondeur radiale H_{D} est au moins égale à 50% de l'épaisseur radiale H_{T}, dites découpures efficaces, ayant une longueur cumulée L_{D}, mesurée sur une surface radialement extérieure (23) de la bande roulement (2),
- la bande de roulement (2) ayant un taux de lamellisation surfacique TL, exprimé en m/m², égal au rapport entre la longueur cumulée L_{D} des découpures efficaces (21) et l'aire A de la surface radialement extérieure (23) de la bande de roulement égale à 2ΠR_{E}*W_{T}, où R_{E} est le rayon extérieur du pneumatique,
- l'armature de sommet (3) comprenant une armature de protection (4), une armature de travail (5) et une armature de frettage (6),
- l'armature de protection (4), radialement la plus extérieure, comprenant au moins deux couches de protection (41, 42), formées de renforts métalliques élastiques, formant, avec la direction circonférentielle (XX'), un angle compris entre 15° et 45°, chaque couche de protection (41, 42) ayant une résistance à rupture R par unité de largeur de couche, exprimée en daN/m, Rₘₐₓ étant la valeur maximale des résistances à rupture R des couches de protection (41, 42),
- l'armature de travail (5) comprenant au moins deux couches de travail (51, 52), formées de renforts métalliques non élastiques, croisés d'une couche de travail à la suivante et formant, avec une direction circonférentielle (XX') du pneumatique, un angle compris entre 15° et 45°,
- l'armature de frettage (6), comprenant au moins une couche de frettage (61, 62), formée de renforts métalliques, formant, avec la direction circonférentielle (XX'), un angle un angle au plus égal à 15°,
**caractérisé en ce que** le taux de lamellisation surfacique TL de la bande de roulement (2) est au moins égal à 3 m/m² **et en ce qu'**un ratio de couplage C, égal au rapport entre la valeur maximale Rₘₐₓ des résistances à rupture R des couches de protection (41, 42) et le taux de lamellisation surfacique TL de la bande de roulement (2), est au moins égal à 30000 daN.

2. Pneumatique (1) pour véhicule lourd de type génie civil selon la revendication 1, **dans lequel** le ratio de couplage C est au moins égal à 40000 daN.

3. Pneumatique (1) pour véhicule lourd de type génie civil selon l'une des revendications 1 ou 2, **dans lequel** le ratio de couplage C est au plus égal à 120000 daN.

4. Pneumatique (1) pour véhicule lourd de type génie civil selon l'une quelconque des revendications 1 à 3, **dans lequel** le taux de lamellisation TL de la bande de roulement (2) est au moins égal à 3.5 m/m².

5. Pneumatique (1) pour véhicule lourd de type génie civil selon l'une quelconque des revendications 1 à 4, **dans lequel** le taux de lamellisation TL de la bande de roulement (2) est au plus égal à 9 m/m².

6. Pneumatique (1) pour véhicule lourd de type génie civil selon l'une quelconque des revendications 1 à 5, **dans lequel** la valeur maximale Rₘₐₓ des résistances à rupture R des couches de protection (41, 42) est au moins égale à 150000 daN/m, de préférence au moins égale à 160000 daN/m.

7. Pneumatique (1) pour véhicule lourd de type génie civil selon l'une quelconque des revendications 1 à 6, **dans lequel** la résistance à rupture R de la couche de protection (41, 42) la plus radialement extérieure est égale à la valeur maximale Rₘₐₓ des résistances à rupture R des couches de protection (41, 42).

8. Pneumatique (1) pour véhicule lourd de type génie civil selon l'une quelconque des revendications 1 à 7, **dans lequel** la résistance à rupture R de chaque couche de protection (41, 42) est égale à la valeur maximale Rₘₐₓ des résistances à rupture R des couches de protection (41, 42).

9. Pneumatique (1) pour véhicule lourd de type génie civil selon l'une quelconque des revendications 1 à 8, **dans lequel** la valeur minimale Rₘᵢₙ des résistances à rupture R des couches de protection est telle que le ratio Rₘᵢₙ/TL est au moins égal à 30000 daN.

10. Pneumatique (1) pour véhicule lourd de type génie civil selon l'une quelconque des revendications 1 à 9, **dans lequel** les renforts métalliques élastiques des couches de protection (41, 42) sont des câbles multitorons, constitués d'une unique couche de N torons, N étant compris entre 3 et 5, chaque toron étant constitués de fils métalliques.

11. Pneumatique (1) pour véhicule lourd de type génie civil selon la revendication 10, **dans lequel** chaque toron, de formule (M+P), comprend une couche interne de M fils métalliques et une couche externe de P fils métalliques enroulée autour de la couche interne.

12. Pneumatique (1) pour véhicule lourd de type génie civil selon la revendication 11, **dans lequel** les renforts métalliques élastiques des couches de protection (41, 42) sont des câbles multitorons, de formule 4*(3+8)*0.35, constitués d'une unique couche de 4 torons, chaque toron comprenant une couche interne de 3 fils métalliques et une couche externe de 8 fils métalliques enroulée autour de la couche interne, et chaque toron étant constitués de fils métalliques de diamètre égal à 0.35 mm.

13. Pneumatique (1) pour véhicule lourd de type génie civil selon la revendication 11, **dans lequel** les renforts métalliques élastiques des couches de protection (41, 42) sont des câbles multitorons, de formule 4*(4+9)*0.26, constitués d'une unique couche de 4 torons, chaque toron comprenant une couche interne de 4 fils métalliques et une couche externe de 9 fils métalliques enroulée autour de la couche interne, et chaque toron étant constitués de fils métalliques de diamètre égal à 0.26 mm.

14. Pneumatique (1) pour véhicule lourd de type génie civil selon la revendication 10, **dans lequel** chaque toron, de formule (M+N+P), comprend une couche intermédiaire de N fils métalliques enroulée autour de la couche interne de M fils métalliques, la couche externe de P fils métalliques étant enroulée autour de la couche intermédiaire de N fils métalliques.

15. Pneumatique (1) pour véhicule lourd de type génie civil selon l'une des revendications 11 ou 14, **dans lequel** la couche externe de P fils métalliques est insaturée.

16. Pneumatique (1) pour véhicule lourd de type génie civil selon l'une quelconque des revendications 10 à 15, **dans lequel** le diamètre des fils constitutifs de chaque toron est au moins égal à 0.22 mm, de préférence au moins égal à 0.26 mm.

17. Pneumatique (1) pour véhicule lourd de type génie civil selon l'une quelconque des revendications 10 à 16, **dans lequel** les renforts métalliques élastiques des couches de protection (41, 42) présentent, au test de perméabilité à l'air, un débit d'air moyen inférieur à 30 cm³/min.

18. Pneumatique (1) pour véhicule lourd de type génie civil selon l'une quelconque des revendications 10 à 17, **dans lequel** les renforts métalliques élastiques des couches de protection (41, 42) sont répartis à un pas moyen compris entre 3.5 mm et 5 mm.

19. Pneumatique (1) pour véhicule lourd de type génie civil selon l'une quelconque des revendications 1 à 18, l'ensemble des découpures (21) ayant un volume total V_{D} et l'ensemble des éléments en relief (22) ayant un volume total V_{R}, la bande de roulement (2) ayant un taux d'entaillement volumique TEV, exprimé en %, égal au rapport entre le volume total V_{D} des découpures (21) et la somme du volume total V_{D} des découpures (21) et du volume total des éléments en relief (22) **dans lequel** le taux d'entaillement volumique TEV de la bande de roulement (2) est au moins égal à 12%, de préférence au moins égal à 14%.

## Patentansprüche

1. Reifen (1) für ein schweres Baufahrzeug, umfassend einen Laufstreifen (2) und eine Scheitelbewehrung (3) radial innerhalb des Laufstreifens (2):
- wobei der Laufstreifen (2) eine radiale Dicke H_{T} von mindestens 60 mm aufweist und Ausschnitte (21) mit einer Breite W_{D} und einer radialen Tiefe H_{D}, sowie durch die Ausschnitte (21) getrennte erhabene Elemente (22) umfasst,
- wobei die Ausschnitte (21), deren Breite W_{D} höchstens 20 % der radialen Tiefe H_{D} beträgt und deren radiale Tiefe H_{D} mindestens 50 % der radialen Dicke H_{T} beträgt und die als wirksame Ausschnitte bezeichnet werden, eine über eine radiale Außenfläche (23) des Laufstreifens (2) gemessene kumulative Länge L_{D} aufweisen,
- wobei der Laufstreifen (2) eine in m/m² ausgedrückte Oberflächenlamellierungsrate TL aufweist, die gleich dem Verhältnis zwischen der kumulativen Länge L_{D} der wirksamen Ausschnitte (21) und der Fläche A der radialen Außenfläche (23) des Laufstreifens von 2ΠR_{E}*W_{T} ist, wobei R_{E} der Außenradius des Reifens ist,
- wobei die Scheitelbewehrung (3) eine Schutzbewehrung (4), eine Arbeitsbewehrung (5) und eine Umhüllungsbewehrung (6) umfasst,
- wobei die radial äußerste Schutzbewehrung (4) mindestens zwei Schutzschichten (41, 42) umfasst, die aus elastischen Metallverstärkungen ausgebildet sind, die mit der Umfangsrichtung (XX') einen Winkel zwischen 15 ° und 45 ° bilden, wobei jede Schutzschicht (41, 42) eine in daN/m ausgedrückte Reißfestigkeit R pro Schichtbreiteneinheit aufweist, wobei Rₘₐₓ der Maximalwert der Reißfestigkeiten R der Schutzschichten (41, 42) ist,
- wobei die Arbeitsbewehrung (5) mindestens zwei Arbeitsschichten (51, 52) umfasst, die aus nicht elastischen Metallverstärkungen ausgebildet sind, die sich von einer Arbeitsschicht zur nächsten überkreuzen und mit einer Umfangsrichtung (XX') des Reifens einen Winkel zwischen 15 ° und 45 ° ausbilden,
- wobei die Umhüllungsbewehrung (6) mindestens eine Umhüllungsschicht (61, 62), aufweist, die aus Metallverstärkungen ausgebildet ist, die mit der Umfangsrichtung (XX') einen Winkel von höchstens 15° bilden,
**dadurch gekennzeichnet, dass** die Oberflächenlamellierungsrate TL des Laufstreifens (2) mindestens 3 m/m² beträgt und dass ein Kopplungsverhältnis C, das dem Verhältnis zwischen dem Maximalwert Rₘₐₓ der Reißfestigkeiten R der Schutzschichten (41, 42) und der Oberflächenlamellierungsrate TL des Laufstreifens (2) entspricht, mindestens 30.000 daN beträgt.

2. Reifen (1) für ein schweres Baufahrzeug nach Anspruch 1, wobei das Kopplungsverhältnis C mindestens 40.000 daN beträgt.

3. Reifen (1) für ein schweres Baufahrzeug nach einem der Ansprüche 1 oder 2, wobei das Kopplungsverhältnis C mindestens 120.000 daN beträgt.

4. Reifen (1) für ein schweres Baufahrzeug nach einem der Ansprüche 1 bis 3, wobei die Lamellierungsrate TL des Laufstreifens (2) mindestens 3,5 m/m² beträgt.

5. Reifen (1) für ein schweres Baufahrzeug nach einem der Ansprüche 1 bis 4, wobei die Lamellierungsrate TL des Laufstreifens (2) höchstens 9 m/m² beträgt.

6. Reifen (1) für ein schweres Baufahrzeug nach einem der Ansprüche 1 bis 5, wobei der Maximalwert Rₘₐₓ der Reißfestigkeiten R der Schutzschichten (41, 42) mindestens 150.000 daN/m, vorzugsweise mindestens 160.000 daN/m, beträgt.

7. Reifen (1) für ein schweres Baufahrzeug nach einem der Ansprüche 1 bis 6, wobei die Reißfestigkeit R der radial äußersten Schutzschicht (41, 42) gleich dem Maximalwert Rₘₐₓ der Reißfestigkeiten R der Schutzschichten (41, 42).

8. Reifen (1) für ein schweres Baufahrzeug nach einem der Ansprüche 1 bis 7, wobei die Reißfestigkeit R jeder Schutzschicht (41, 42) gleich dem Maximalwert Rₘₐₓ der Reißfestigkeiten R der Schutzschichten (41, 42) ist.

9. Reifen (1) für ein schweres Baufahrzeug nach einem der Ansprüche 1 bis 8, wobei der Mindestwert Rₘᵢₙ der Reißfestigkeiten R der Schutzschichten so ist, dass das Verhältnis Rₘᵢₙ/TL mindestens 30.000 daN beträgt.

10. Reifen (1) für ein schweres Baufahrzeug nach einem der Ansprüche 1 bis 9, wobei die elastischen Metallverstärkungen der Schutzschichten (41, 42) mehrsträngige Seile sind, die aus einer einzigen Schicht von N Strängen gebildet sind, wobei N zwischen 3 und 5 liegt, wobei jeder Strang aus Metalldrähten gebildet ist.

11. Reifen (1) für ein schweres Baufahrzeug nach Anspruch 10, wobei jeder Strang der Formel (M+P) eine innere Schicht aus M Metalldrähten und eine um die innere Schicht gewickelte äußere Schicht aus P Metalldrähten umfasst.

12. Reifen (1) für ein schweres Baufahrzeug nach Anspruch 11, wobei die elastischen Metallverstärkungen der Schutzschichten (41, 42) mehrsträngige Seile der Formel 4*(3+8)*0,35 sind, die aus einer einzigen Schicht von 4 Strängen gebildet sind, wobei jeder Strang eine innere Schicht von 3 Metalldrähten und eine um die innere Schicht gewickelte äußere Schicht von 8 Metalldrähten umfasst und wobei jeder Strang aus Metalldrähten mit einem Durchmesser von 0,35 mm gebildet ist.

13. Reifen (1) für ein schweres Baufahrzeug nach Anspruch 11, wobei die elastischen Metallverstärkungen der Schutzschichten (41, 42) mehrsträngige Seile der Formel 4*(4+9)*0,26 sind, die aus einer einzigen Schicht von 4 Strängen gebildet sind, wobei jeder Strang eine innere Schicht von 4 Metalldrähten und eine um die innere Schicht gewickelte äußere Schicht von 9 Metalldrähten umfasst und wobei jeder Strang aus Metalldrähten mit einem Durchmesser von 0,26 mm gebildet ist.

14. Reifen (1) für ein schweres Baufahrzeug nach Anspruch 10, wobei jeder Strang der Formel (M+N+P) eine Zwischenschicht von N Metalldrähten umfasst, die um die innere Schicht von M Metalldrähten gewickelt ist, wobei die äußere Schicht von P Metalldrähten um die Zwischenschicht von N Metalldrähten gewickelt ist.

15. Reifen (1) für ein schweres Baufahrzeug nach einem der Ansprüche 11 oder 14, wobei die äußere Schicht von P Metalldrähten ungesättigt ist.

16. Reifen (1) für ein schweres Baufahrzeug nach einem der Ansprüche 10 bis 15, wobei der Durchmesser der Drähte, die jeden Strang bilden, mindestens 0,22 mm, vorzugsweise mindestens 0,26 mm, beträgt.

17. Reifen (1) für ein schweres Baufahrzeug nach einem der Ansprüche 10 bis 16, wobei die elastischen Metallverstärkungen der Schutzschichten (41, 42) im Luftdurchlässigkeitstest einen mittleren Luftdurchsatz von weniger als 30 cm³/min aufweisen.

18. Reifen (1) für ein schweres Baufahrzeug nach einem der Ansprüche 10 bis 17, wobei die elastischen Metallverstärkungen der Schutzschichten (41, 42) in einem mittleren Abstand zwischen 3,5 mm und 5 mm verteilt sind.

19. Reifen (1) für ein schweres Baufahrzeug nach einem der Ansprüche 1 bis 18, wobei die Gesamtheit der Ausschnitte (21) ein Gesamtvolumen V_{D} aufweist und die Gesamtheit der erhabenen Elemente (22) ein Gesamtvolumen V_{R} aufweist, wobei der Laufstreifen (2) einen in % ausgedrückten volumenbezogenen Negativprofilanteil TEV aufweist, der dem Verhältnis zwischen dem Gesamtvolumen V_{D} der Ausschnitte (21) und der Summe des Gesamtvolumens V_{D} der Ausschnitte (21) und dem Gesamtvolumen der erhabenen Elemente (22) entspricht, wobei der volumenbezogene Negativprofilanteil TEV des Laufstreifens (2) mindestens 12 %, vorzugsweise mindestens 14 %, beträgt.

## Claims

1. Tyre (1) for a heavy vehicle of construction plant type, comprising a tread (2) and a crown reinforcement (3) radially on the inside of the tread (2):
- the tread (2), having a radial thickness H_{T} at least equal to 60 mm, comprising cuts (21) having a width W_{D} and a radial depth H_{D}, and elements in relief (22) separated by the cuts (21),
- the cuts (21), the width W_{D} of which is at most equal to 20% of the radial depth H_{D} and the radial depth H_{D} of which is at least equal to 50% of the radial thickness H_{T}, referred to as effective cuts, having a cumulative length L_{D} measured on a radially outer surface (23) of the tread (2),
- the tread (2) having a degree of surface siping TL, expressed in m/m², equal to the ratio between the cumulative length L_{D} of the effective cuts (21) and the area A of the radially outer surface (23) of the tread equal to 2ΠR_{E}*W_{T}, where R_{E} is the external radius of the tyre,
- the crown reinforcement (3) comprising a protective reinforcement (4), a working reinforcement (5) and a hoop reinforcement (6),
- the protective reinforcement (4), which is radially outermost, comprising at least two protective layers (41, 42), formed of elastic metallic reinforcers, that form an angle of between 15° and 45° with the circumferential direction (XX'), each protective layer (41, 42) having a breaking strength R per unit of layer width, expressed in daN/m, Rₘₐₓ being the maximum value of the breaking strengths R of the protective layers (41, 42),
- the working reinforcement (5) comprising at least two working layers (51, 52), formed of inelastic metallic reinforcers that are crossed from one working layer to the next and form an angle of between 15° and 45° with a circumferential direction (XX') of the tyre,
- the hoop reinforcement (6) comprising at least one hooping layer (61, 62), formed of metallic reinforcers that form an angle at most equal to 15° with the circumferential direction (XX'),
**characterized in that** the degree of surface siping TL of the tread (2) is at least equal to 3 m/m², **and in that** a coupling ratio C, equal to the ratio between the maximum value Rₘₐₓ of the breaking strengths R of the protective layers (41, 42) and the degree of surface siping TL of the tread (2), is at least equal to 30000 daN.

2. Tyre (1) for a heavy vehicle of construction plant type according to Claim 1, **wherein** the coupling ratio C is at least equal to 40000 daN.

3. Tyre (1) for a heavy vehicle of construction plant type according to either of Claims 1 and 2, **wherein** the coupling ratio C is at most equal to 120000 daN.

4. Tyre (1) for a heavy vehicle of construction plant type according to any one of Claims 1 to 3, **wherein** the degree of siping TL of the tread (2) is at least equal to 3.5 m/m².

5. Tyre (1) for a heavy vehicle of construction plant type according to any one of Claims 1 to 4, **wherein** the degree of siping TL of the tread (2) is at most equal to 9 m/m².

6. Tyre (1) for a heavy vehicle of construction plant type according to any one of Claims 1 to 5, **wherein** the maximum value Rₘₐₓ of the breaking strengths R of the protective layers (41, 42) is at least equal to 150000 daN/m, preferably at least equal to 160000 daN/m.

7. Tyre (1) for a heavy vehicle of construction plant type according to any one of Claims 1 to 6, **wherein** the breaking strength R of the radially outermost protective layer (41, 42) is equal to the maximum value Rₘₐₓ of the breaking strengths R of the protective layers (41, 42).

8. Tyre (1) for a heavy vehicle of construction plant type according to any one of Claims 1 to 7, **wherein** the breaking strength R of each protective layer (41, 42) is equal to the maximum value Rₘₐₓ of the breaking strengths R of the protective layers (41, 42).

9. Tyre (1) for a heavy vehicle of construction plant type according to any one of Claims 1 to 8, **wherein** the minimum value Rₘᵢₙ of the breaking strengths R of the protective layers is such that the ratio Rₘᵢₙ/TL is at least equal to 30000 daN.

10. Tyre (1) for a heavy vehicle of construction plant type according to any one of Claims 1 to 9, **wherein** the elastic metallic reinforcers of the protective layers (41, 42) are multistrand ropes, made up of a single layer of N strands, N being between 3 and 5, each strand being made up of metal threads.

11. Tyre (1) for a heavy vehicle of construction plant type according to Claim 10, **wherein** each strand, of structure (M+P), comprises an internal layer of M metal threads and an external layer of P metal threads wound around the internal layer.

12. Tyre (1) for a heavy vehicle of construction plant type according to Claim 11, **wherein** the elastic metallic reinforcers of the protective layers (41, 42) are multistrand ropes, of structure 4*(3+8)*0.35, made up of a single layer of 4 strands, each strand comprising an internal layer of 3 metal threads and an external layer of 8 metal threads wound around the internal layer, and each strand being made up of metal threads with a diameter equal to 0.35 mm.

13. Tyre (1) for a heavy vehicle of construction plant type according to Claim 11, **wherein** the elastic metallic reinforcers of the protective layers (41, 42) are multistrand ropes, of structure 4*(4+9)*0.26, made up of a single layer of 4 strands, each strand comprising an internal layer of 4 metal threads and an external layer of 9 metal threads wound around the internal layer, and each strand being made up of metal threads with a diameter equal to 0.26 mm.

14. Tyre (1) for a heavy vehicle of construction plant type according to Claim 10, **wherein** each strand, of structure (M+N+P), comprises an intermediate layer of N metal threads wound around the internal layer of M metal threads, the external layer of P metal threads being wound around the intermediate layer of N metal threads.

15. Tyre (1) for a heavy vehicle of construction plant type according to either of Claims 11 and 14, **wherein** the external layer of P metal threads is unsaturated.

16. Tyre (1) for a heavy vehicle of construction plant type according to any one of Claims 10 to 15, **wherein** the diameter of the constituent threads of each strand is at least equal to 0.22 mm, preferably at least equal to 0.26 mm.

17. Tyre (1) for a heavy vehicle of construction plant type according to any one of Claims 10 to 16, **wherein** the elastic metallic reinforcers of the protective layers (41, 42) have, in the air permeability test, a mean air flow rate of less than 30 cm³/min.

18. Tyre (1) for a heavy vehicle of construction plant type according to any one of Claims 10 to 17, **wherein** the elastic metallic reinforcers of the protective layers (41, 42) are distributed at a mean spacing of between 3.5 mm and 5 mm.

19. Tyre (1) for a heavy vehicle of construction plant type according to any one of Claims 1 to 18, the set of cuts (21) having a total volume V_{D} and the set of elements in relief (22) having a total volume V_{R}, the tread (2) having a volumetric void ratio TEV, expressed in %, equal to the ratio between the total volume V_{D} of the cuts (21) and the sum of the total volume V_{D} of the cuts (21) and the total volume of the elements in relief (22), **wherein** the volumetric void ratio TEV of the tread (2) is at least equal to 12%, preferably at least equal to 14%.
